# EUROPEAN PATENT SPECIFICATION

(11) **EP 2 127 539 B1**
(45) Date of publication and mention of the grant of the patent: **13.04.2016**
(21) Application number: 09007196.0
(22) Date of filing: 29.05.2009
(51) Int. Cl.: A23L 17/60, A23L 2/52, A23L 2/38, A23L 11/00

(54) **Method for obtaining a soy and algae-based liquid food product and liquid food product obtained**
Verfahren zum Erhalt eines flüssigen Lebensmittels mit Sojabohne und Seetang und damit erhaltenes flüssiges Lebensmittel
Procédé pour l'obtention d'aliments liquides contenant du soja et du goémon, et aliments liquides obtenus

(30) Priority: 29.05.2008 EP 08380162
(43) Date of publication of application: 02.12.2009
(73) Proprietor: Liquats Vegetals SA, Girona (ES)
(72) Inventor: Erra Serrabasa, Josep Maria, 17005 Girona (ES)
(74) Representative: Gislon, Gabriele

(56) References cited:
- EP-A- 1 917 860
- WO-A1-2006/016755
- JP-A- 6 062 778
- US-A- 3 563 762

## Description

The present invention relates to a method for obtaining a soya-based liquid food product and to a liquid food product obtained by means of the mentioned method.

The invention thus provides a drinkable liquid food product incorporating as components soy and dry marine algae, the latter as a stabilizer and a source of nutritional elements.

Several food products containing soy, some of them being drinkable liquids and others being in a solid form, are known in the state of the art, the drinkable products having in common the fact that they form a beverage known as "soy milk or beverage".

Soya-based food products which incorporate marine algae among their components are also known. Thus, patent CN-A-1409976 describes a soy milk powder-based product with a seaweed and the method for preparing it. In the mentioned patent, the seaweed used to obtain said product is obtained from fresh or dried seaweed subjected to processes for the removing of impurities, deodorization, desiccation, flavoring and cutting.

Likewise, patent JP-A-6062778 relates to a food in a solid format containing soy milk, solidifying the soy milk and edible marine algae. The method for obtaining the mentioned food uses powdered marine algae mixed with a suitable amount of water, heating this mixture until the algae are dissolved in the water, and filtering the mixture thus obtained. Soy milk is added to the filtered solution in an equivalent amount, heating again and stirring slowly until it boils. The resulting mixture is cooled and solidified, obtaining the mentioned food.

Patent KR-A-20020025940 describes a method for manufacturing a soy milk-based dietary supplement containing medicinal herbs, marine algae, animals, plants, healthy foods and fungi among its components. The soy milk obtained thus comprises pharmacological components, organic acids, several vitamins and other healthy nutrients.

Patent JP-A-11187839 relates to a soy milk-based food preparation, subjecting it to a coagulation process to produce tofu. A marine algae extract, among other ingredients, is used in the process for preparing this food preparation, which extract is mixed with a coagulating agent to obtain the mentioned tofu.

US 3563762, published in 1965, describes a method of preparing a soya beverage starting from beans that are dedeshelled (i.e. dehulled) compressed into flakes, cooked at high pressure, extruded and finally ground to soya powder; the soya powder is then mixed with stabilizers and additives in water, cooked, homogenized under high pressure and bottled. Addition of stabilizer carragenin such as that obtained from alga Chondrus is mentioned to reach a good stability of the suspension. However, the suspension containing the carragenin must be shaked at a temperature of 50-60 C to start gelification of carragenin. A variant of the method is shown in fig. 3, in which soya powder is cooked in water, homogenized under high pressure and is centrifuged to remove insoluble carbohydrates before adding the additives (including stabilizers).The mixture is then further cooked, homogenized and finally bottled. According to the examples, if all the coarse particles are centrifuged out of the initial suspension, no carragenin is added. In both methods a high pressure homogenisation and several cooking steps are carried out; homogenisation is considered essential to increase the amount of soya flour in the final beverage without impairing the beverage stability. This method is complicated, expensive and still cannot provide a good stability of the final product.

EP 1917860, in the name of Bartocci, was published on 07.05.2008. It refers to a method of preparing a soya beverage by first treating the soya beans in water at 80-100 C to deactivate enzymes, then cooking and grinding at 100 C, adjusting the pH with fossil algae, using selected enzymes for hydrolysing the proteins, with final centrifugation and sterilization. Further algae can be added as mineral supplements, after centrifugal filtration. There is no mention in this document of the use of whole algae in the production process as a source of carragenin and nutritional elements.

There is the need to provide an alternative to the state of the art processes and products by means of a novel method that is simple and economical to carry out and that results in a stable and excellent product.

This problem is solved by the present invention that provides a process of producing a soya beverage according to claim 1, that enables to obtain a soy and marine algae-based drinkable liquid food product, said algae being preferably selected from red algae and acting as a stabilizer and as a source of nutritional elements, the beverage possibly incorporating a series of additional ingredients.

### Description of the Invention

In a first aspect, the present invention relates to a method for obtaining a soy-based drinkable liquid food product, which comprises preparing a mixture with the following ingredients:
- whole deshelled soya,
- water, and
- whole dry marine algae,
wherein said dry marine algae and said soya are already crushed or are crushed while preparing the mixture, i.e. in the presence of water by wet grinding. The algae is preferably selected from red algae. The water, and crushed soya and algae are heated to a temperature that is preferably within the range of 60 to 90 °C, preferably 60 to 85°C, so that said mixture produces a fluid paste containing both soluble and insoluble proteins. The mentioned heat supply to the described process for preparing the mixture is carried out in a preferred embodiment by using hot water at a temperature of 60-90°C, the water being used for wet grinding of soybeans and algae together.

In the preferred embodiment, the heating is carried out for a time within the range of 2 to 5 minutes. The obtained mixture is then homogenized and from the resulting homogenized fluid paste a first part, a thick paste containing the insoluble proteins, is separated in a way known in the art, leaving a second liquid part providing said liquid food product in a liquid form.

The separation is preferably carried out by centrifugation, in a decanter: the solids are retained in the decanter and the liquid exits the decanter upon centrifugation.

Different ingredients such as calcium salts or other minerals, sugars, sweeteners, vitamins, soluble cereals, coffee and cocoa, which can comprise from 0 to 15% of the total weight of the dry matter, can be added to this liquid part.

The dry marine alga used to obtain the mentioned food product is obtained from a whole alga, the mentioned whole alga preferably being one or more of a red alga of the genus Chondrus, species Chrondus Crispus, a red alga of the genus Gigartina, e.g Gigartina mammillosa and Gigartina acicularis, or a red alga of the genus Eucheuma, depending on the embodiment.

No soaking of the soybeans is required or carried out if they are ground and crushed directly in the hot water, by wet grinding.

The algae are wet ground together with the soybeans, but a previous separate crushing step can be carried out.

The soya and the algae are thermally treated together, in water at the required temperature; during the thermal treatment, the algae will release into the water mixture the following products: soluble fibers including carragenins and natural occurring stabilizer, calcium, vitamins, proteins, fatty acids, sterols, high quality proteins, magnesium, iodine, iron, phosphorus, sodium.

Thus, the invention provides for an extraction in water of the dry algae together with the soya and is different from the known art, where carragenin, i.e. the extracted product, is added to the soya product. This hot water extraction is carried out together with the soya, in a mixture, rather then separately; in any case, at least the homogenization step should be carried out on the previously heated mixture of ground algae and soya. Without giving a full scientific explanation, it is thought that the soya fats may help in the extraction of the interesting compounds from the algae and, in fact, it was found that at least part of the flavours of the algae, i.e. those compounds that give its "salty" taste, is transferred to the liquid product after homogenization and separation.

According to the present invention, at least an homogenization step is carried out on a mixture comprising:
- soya de-shelled, i.e. dehulled, in a ratio by weight with respect to the total mixture between 10 and 20%,
- dry marine algae in a ratio by weight with respect to the total mixture between 0.01 and 0.15%, and
- water as 80-90% of the total weight of the mixture, and enough to top up the remaining components to 100% by weight.

In the method described in the present invention, said soya and said dry marine alga are crushed together by fine wet grinding, and are thermally treated together.

Likewise, the method of the present invention comprises a processing step for homogenizing the mixture which provides a stable emulsion, in which the dry marine alga acts as a stabilizer.

In a second aspect, the invention provides a soya-based liquid food product, as obtainable with the above mentioned process and which is in the form of a solution and emulsion containing:
- 1% to 5% by weight of soluble soya proteins,
- 0.01 to 0.12% by weight of soluble products from dry marine algae, and
- water up to 100% by weight.

More specifically, the liquid product is a water solution of soluble soya and algae proteins and salts, in which the soya fats are dispersed in the form of an emulsion.

The drinkable food product object of the present invention can be further added with at least one additional ingredient of the group consisting of the following ingredients: calcium salts or other minerals and vitamins in a ratio of up to 0.5% of the total weight of dry matter; and soluble cereals, sugars, sweeteners, coffee and cocoa, or a combination thereof comprising 0.1-15% of the total weight of dry matter.

A typical composition for a cocoa formulation is as follows:
soymilk: 87.16%
sugar 6.5%
corn syrup 4.8%
cocoa powder 1.2%
lecithin 0.02%
calcium carbonate 0.3%
carragenan (extra, in addition to that obtainable from the algae): 0.02%

Other features and advantages of the invention will be observed in the description of embodiments which are detailed below by way of a non-limiting explanation, with reference to the attached drawings, in which:
- Figure 1 is a flow chart describing the steps through which the marine alga and the soy pass from their reception in the warehouses until they are mixed and the metered base product is obtained; and
- Figure 2 is a flow chart showing the steps for obtaining the packaged end product from the metered base product.

### Description of a preferred embodiment.

The present invention relates to a method for obtaining a soy-based food product in a liquid and therefore drinkable format, and to the drinkable product thus obtained.

The mentioned method comprises preparing a mixture with the following ingredients:
- whole deshelled soy,
- water, and
- whole dry marine algae as a stabilizer and source of nutritional elements.

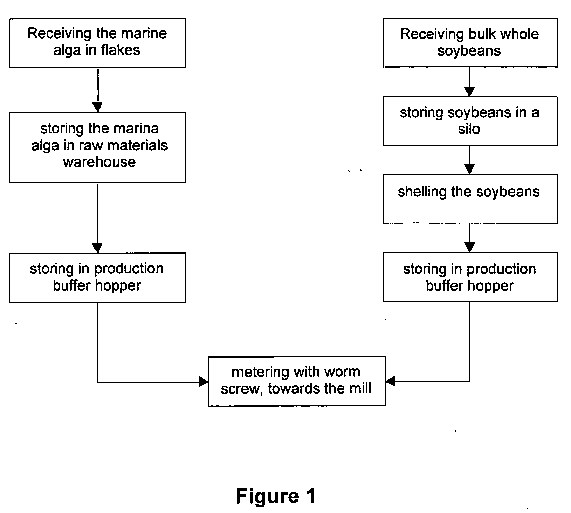

Figure 1 shows in a flow chart the steps comprising the marine alga and the soy from their arrival at the warehouses until they are mixed and the metered base product is obtained, in which suitable percentages of soy and marine alga are mixed to obtain the food product object of the present invention.

In a preferred embodiment, the marine alga used is obtained from a whole red alga selected from the group comprising at least one of the following algae genera: Chondrus, Gigartina, Eucheuma. The mentioned marine alga is subjected to drying, using it for the mentioned mixture in the form of flakes.

As regards the percentages of the different ingredients comprised in the mixture, they are the following:
- water as 80-90% of the total weight of the solution;
- soy in a ratio by weight with respect to the total solution between 10 and 20%, and
- alga in a ratio by weight with respect to the total solution between 0.01 and 0.15%.

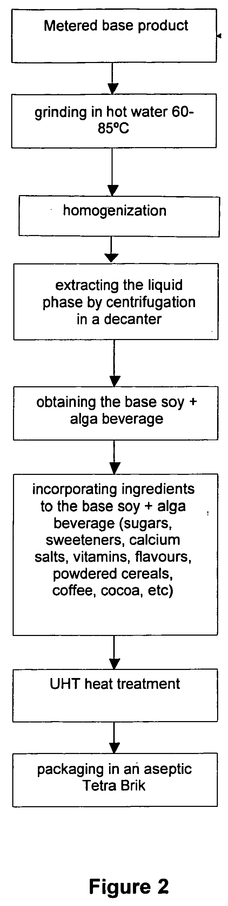

In addition, Figure 2 shows the steps comprised in obtaining the mentioned food product from obtaining the metered base product until its packaging in a Tetra Brik or other suitable container.

According to the preferred embodiment described in said figures, the dry marine alga and the soy are crushed together by fine wet grinding while preparing the mixture, with a controlled heat supply for their activation by means of hot water at a temperature of 60-90°C, so that said mixture produces a fluid paste from which, after centrifugation in a decanter, a liquid part providing said food product in the form of a solution forming the base soy and marine alga beverage is separated.

Different ingredients such as calcium salts or other minerals, sugars, sweeteners, vitamins, soluble cereals, coffee and cocoa, which can comprise from 0.1 to 15% of the total weight of the dry matter, can be incorporated in this base soya and marine alga beverage.

The mixture is subjected to a processing step for its homogenization, obtaining a stable emulsion forming the soy-based drinkable liquid food product with dry marine alga as a stabilizer, object of the present invention. In the preferred embodiment the homogenization is carried out on the mixture before it is centrifuged

The present invention also provides for a process for preparing a soya based beverage in which de-shelled, i.e. dehulled soybeans, are wet ground with hot water at a temperature of 60 to 90 °C, either alone or together with edible vegetals that can impart a taste to the obtained mixture.

Examples of the vegetals that can be used are tea, stevia, mint, and aromatic plants in general. Stevia is useful in view of its ability to impart a sweet taste to the beverage. These vegetals can be ground with the de-shelled soya with or without the presence of the algae.

A person skilled in the art could introduce changes and modifications in the described embodiments without departing from the scope of the invention as it is defined in the attached claims.

## Claims

1. A method for obtaining a soya-based drinkable liquid food product, **characterized in that** it comprises the steps of:
- preparing a mixture with the following ingredients: whole deshelled soy, water, and whole dry marine algae; wherein said dry marine algae and said soy are already crushed or are crushed while preparing the mixture by wet grinding together said dry marine algae and said soy at a temperature in the range of 60-90°C;- heating the ground mixture to provide a fluid paste;
- homogenizing said mixture;
- separating a liquid part providing said food product from the said mixture paste.

2. A method according to claim 1, wherein at least said homogenization step is carried out on the previously heated mixture of ground algae and soy.

3. A method according to claim 1 or 2, **characterized in that** said separation of a liquid part from said fluid paste is carried out by centrifugation, decanting or filtration and **in that** the drinkable liquid food product obtained is presented in the form of a solution in which soya fats are emulsified.

4. A method according to any previous claim, **characterized in that** said dry marine algae is a red alga selected from the group comprising at least one of the following algae genera: Chondrus, Gigartina, Eucheuma.

5. A method according to any previous claim, **characterized in that** said mixture comprises:
- water as 80-90% of the total weight of the solution;
- soya in a ratio by weight with respect to the total solution between 10 and 20%, and
- algae in a ratio by weight with respect to the total solution between 0.01 and 0.15%.

6. A method according to any previous claim, wherein said homogenizing step is carried out before the separation step.

7. A method according to any previous claim, further comprising the step of adding to the solution at least one additional ingredient from the group consisting of the following ingredients: calcium salts or other minerals, sugars, sweeteners, vitamins, soluble cereals, coffee and cocoa, or a combination thereof.

8. The method according to claim 7, wherein said ingredients are 0.1 -15% by weight of the total of said dry matter.

9. A liquid food product as obtainable through a process according to any claim 1 to 8, **characterized in that** it comprises:
- 1 to 5% by weight of soluble soya proteins,
- water, and
- 0.01 to 0.12% of products deriving from dry marine algae,
said product including soya fats emulsified in said water and soluble algae proteins and salts.

10. The liquid food product according to claim 9, **characterized in that** said dry marine alga is obtained from a whole alga selected from the group comprising at least one of the following algae genera: Chondrus, Gigartina, Eucheuma.

11. A liquid food product according to claim 9 or 10, wherein said products deriving from said algae comprise one or more of the following: soluble fibers including carragenins and natural occurring stabilizer, calcium, vitamins, proteins, fatty acids, sterols, high quality proteins, magnesium, iodine, iron, phosphorus, sodium.

12. The liquid food product according to any claim 9 to 11, further comprising at least one additional ingredient from the group consisting of the following ingredients:
calcium salts or other minerals and vitamins in a ratio of up to 0.5% of the total weight of dry matter.

13. The liquid food product according to claim 10, **characterized in that** said solution comprises at least one additional ingredient from the group consisting of the following ingredients: soluble cereals, sugars, sweeteners, coffee and cocoa, or a combination thereof comprising 0.1-15% of the total weight of dry matter.

## Patentansprüche

1. Verfahren zum Erhalten eines auf Sojabohnen basierten trinkbaren flüssigen Lebensmittels, **dadurch gekennzeichnet, dass** es die folgenden Schritte umfasst:
- die Zubereitung einer Mischung mit den folgenden Zutaten: ganzen enthülsten Sojabohnen, Wasser und trockenen Seetangen; wobei der genannte trockene Seetang und die genannten Sojabohnen bereits zerkleinert sind oder während der Zubereitung der Mischung durch Nassmahlung der genannten trockenen Seetangen und der genannten Sojabohnen zusammen bei einer Temperatur im Bereich von 60-90ºC zerkleinert werden;
- die Erwärmung der gemahlenen Mischung, um eine fließbare Paste bereitzustellen;
- die Homogenisierung der genannten Mischung;
- die Trennung eines fließbaren Teils, unter Bereitstellung des genannten Lebensmittels aus der genannten Mischungspaste.

2. Verfahren nach Anspruch 1, wobei mindestens der genannte Homogenisierungsschritt bei der vorher erwärmten Mischung aus gemahlenen Seetangen und Sojabohnen durchgeführt wird.

3. Verfahren nach Anspruch 1 oder 2, **dadurch gekennzeichnet, dass** die genannte Trennung eines fließbaren Teils aus der genannten fließbaren Paste durch Zentrifugierung, Dekantierung oder Filtrierung durchgeführt wird, und dass das erhaltene trinkbare flüssige Lebensmittel in Form einer Lösung, in welcher die Sojafette emulgiert sind, präsentiert wird.

4. Verfahren nach einem der vorhergehenden Ansprüche, **dadurch gekennzeichnet, dass** die genannten trockenen Seetange eine Rotalge sind, welche aus der Gruppe umfassend mindestens eine der folgenden Algen-Gattungen ausgewählt wird: *Chondrus, Gigartina, Eucheuma.*

5. Verfahren nach einem der vorhergehenden Ansprüche, **dadurch gekennzeichnet, dass** die genannte Mischung Folgendes umfasst:
- Wasser zu 80-90% des gesamten Gewichtes der Lösung;
- Sojabohnen in einem Gewichtsverhältnis in Bezug auf die gesamte Lösung zwischen 10 und 20%, und
- Seetange in einem Gewichtsverhältnis in Bezug auf die gesamte Lösung zwischen 0,01 und 0,15%.

6. Verfahren nach einem der vorhergehenden Ansprüche, wobei der genannte Homogenisierungsschritt vor dem Trennungsschritt durchgeführt wird.

7. Verfahren nach einem der vorhergehenden Ansprüche, zusätzlich umfassend den Schritt des Hinzufügens zu der Lösung mindestens einer zusätzlichen Zutat aus der Gruppe bestehend aus den folgenden Zutaten: Calciumsalzen oder anderen Mineralien, Zuckern, Süßstoffen, Vitaminen, löslichen Getreiden, Kaffee und Kakao, oder eine Kombination derselben.

8. Verfahren nach Anspruch 7, wobei die genannten Zutaten 0,1 - 15 Gew.-% der Gesamtheit der genannten Trockenmasse betragen.

9. Flüssiges Lebensmittel, wie es mittels einer Verfahrens nach einem der Ansprüche 1 bis 8 erhältlich ist, **dadurch gekennzeichnet, dass** es Folgendes umfasst:
- 1 bis 5 Gew.-% der löslichen Sojaproteine,
- Wasser, und
- 0,01 bis 0,12% der aus trockenen Seetangen abgeleiteten Produkte,
wobei das genannte Produkt im genannten Wasser emulgierte Sojafette und lösliche Algenproteine und Salze enthält.

10. Flüssiges Lebensmittel nach Anspruch 9, **dadurch gekennzeichnet, dass** der genannte trockene Seetang aus ganzen Algen erhalten wird, welche aus der Gruppe umfassend mindestens eine der folgenden Algen-Gattungen ausgewählt werden: *Chondrus, Gigartina, Eucheuma.*

11. Flüssiges Lebensmittel nach Anspruch 9 oder 10, wobei die genannten aus den genannten Algen abgeleiteten Produkte eines oder mehrere aus dem Folgenden umfassen: lösbare Faserstoffe umfassend Carrageen und natürlich vorkommende Stabilisatoren, Calcium, Vitamine, Proteine, Fettsäuren, Sterine, Proteine hoher Qualität, Magnesium, Iod, Eisen, Phosphor, Natrium.

12. Flüssiges Lebensmittel nach einem der Ansprüche 9 bis 11, zusätzlich umfassend mindestens eine zusätzliche Zutat aus der Gruppe bestehend aus den folgenden Zutaten: Calciumsalzen oder anderen Mineralien und Vitaminen in einem Verhältnis von bis zu 0,5% des gesamten Gewichtes der Trockenmasse.

13. Flüssiges Lebensmittel nach Anspruch 10, **dadurch gekennzeichnet, dass** die genannte Lösung mindestens eine zusätzliche Zutat aus der Gruppe bestehend aus den folgenden Zutaten umfasst: löslichen Getreiden, Zuckern, Süßstoffen, Kaffee und Kakao, oder eine Kombination derselben, umfassend 0,1-15% des gesamten Gewichtes der Trockenmasse.

## Revendications

1. Une méthode pour obtenir une denrée alimentaire liquide buvable à base de soja, caractérisée en qu'elle comporte les étapes suivantes:
- préparer un mélange des ingrédients suivants: du soja décortiqué complet, de l'eau, des algues marines sèches complètes; dans laquelle ces algues marines sèches et ce soja sont déjà broyés ou sont broyés pendant la préparation du mélange par meulage humide en même temps de ces algues marines sèches et de ce soja à une température allant de 60 à 90°C;
- chauffer le mélange moulu pour obtenir une pâte fluide;
- homogénéiser ce mélange;
- séparer une partie liquide fournissant cette denrée alimentaire provenant de cette pâte de mélange.

2. Une méthode conformément à la revendication 1, dans laquelle au moins cette étape d'homogénéisation est effectuée dans le mélange préalablement chauffé d'algues et de soja moulus.

3. Une méthode conformément à la revendication 1 ou 2, caractérisée en que cette séparation d'une partie liquide de cette pâte fluide est effectuée par centrifugation, décantage ou filtration et en ce que la denrée alimentaire liquide buvable obtenue est présentée en forme d'une solution dans laquelle les graisses de soja sont émulsifiées.

4. Une méthode conformément à une quelconque des revendications précédentes, **caractérisée en ce que** ces algues marines sèches sont une algue rouge sélectionnée du groupe comportant au moins un des genres d'algues suivants: Chondrus, Gigartina, Eucheuma.

5. Une méthode conformément à une quelconque des revendications précédentes, **caractérisée en ce que** ce mélange comporte:
- de l'eau, 80-90% du poids total de la solution;
- du soja dans un ratio par poids par rapport à la solution totale entre 10 et 20%, et
- des algues dans un ratio par poids par rapport à la solution totale entre 0,01 et 0,15%.

6. Une méthode conformément à une quelconque des revendications précédentes, dans laquelle cette étape d'homogénéisation est effectuée avant l'étape de séparation.

7. Une méthode conformément à une quelconque des revendications précédentes, comportant en plus l'étape d'ajout à la solution d'au moins un ingrédient additionnel du groupe consistant en les ingrédients suivants: sels de calcium ou d'autres minéraux, sucres, édulcorants, vitamines, céréales solubles, café et cacao ou une combinaison de ceux-ci.

8. La méthode conformément à la revendication 7, dans laquelle ces ingrédients sont 0,1-15% du poids du total de cette matière sèche.

9. Une denrée alimentaire liquide pouvant être obtenue à travers d'une méthode conformément à une quelconque des revendications 1 à 8, **caractérisée en ce qu'**elle comprend:
- 1 à 5% du poids des protéines de soja soluble,
- de l'eau, et
- 0,01 à 0,12% de produits dérivés d'algues marines sèches,
ce produit comprenant des graisses de soja émulsifiées dans cette eau et des protéines d'algues solubles et des sels.

10. La denrée alimentaire liquide conformément à la revendication 9, **caractérisée en ce que** cette algue marine sèche est obtenue à partir d'une algue complète sélectionnée du groupe comprenant au moins un des genres d'algues suivants: Chondrus, Gigartina, Eucheuma.

11. Une denrée alimentaire liquide conformément à la revendication 9 ou 10, dans laquelle ces produits dérivés de ces algues comprennent un ou plusieurs des suivants: des fibres solubles comprenant des carragénines et un stabilisateur d'origine naturelle, calcium, vitamines, protéines, acides gras, stérols, protéines de haute qualité, magnésium, iode, fer, phosphore, sodium.

12. La denrée alimentaire liquide conformément à une quelconque des revendications 9 à 11, comprenant en plus au moins un ingrédient additionnel du groupe consistant en les ingrédients suivants: sels de calcium ou d'autres minéraux et des vitamines dans un ratio de jusqu'à 0,5% du poids total de la matière sèche.

13. La denrée alimentaire liquide conformément à la revendication 10, **caractérisée en ce que** cette solution comprend au moins un ingrédient additionnel du groupe consistant en les ingrédients suivants: céréales solubles, sucres, édulcorants, café et cacao, ou une combinaison de ceux-ci comprenant 0,1-15% du poids total de la matière sèche.
